# EUROPEAN PATENT SPECIFICATION

(11) **EP 0 619 063 B1**
(45) Date of publication and mention of the grant of the patent: **15.10.1997**
(21) Application number: 94610018.7
(22) Date of filing: 28.03.1994
(51) Int. Cl.: A01D 34/63, A01D 43/10

(54) **A harvester**
Erntemaschine
Moissonneuse

(30) Priority: 29.03.1993 DK 367/93
(43) Date of publication of application: 12.10.1994
(73) Proprietor: JF-FABRIKEN - J. FREUDENDAHL A/S, DK-6400 Sonderborg (DK)
(72) Inventor: Freudendahl, Jan, DK-6400 Sonderborg (DK)
(74) Representative: Raffnsoee, Knud Rosenstand

(56) References cited:
- US-A- 3 474 601
- US-A- 3 479 805

## Description

The present invention is related to a harvester of the type comprising cutting means carried by a frame, which is suspended in and moveable up and down in relation to a carrier frame, which is designed for being carried by a tractor or which has ground wheels and is designed for being towed by a tractor, a spring being fixed at one end in relation to the first frame and at the other end in relation to the carrier frame to partly carry the first frame and a device being provided for manual adjustment of the tension of the spring.

This is a common construction in for example mowing machines for harvesting grass crops as shown in US-A-3 474 601. The first frame may be suspended in the carrier frame by means of a parallelogram suspension so that it is freely movable up and down. During operation the first frame and the cutting means, as for example a cutting board, rests on the field with a certain pressure depending on the weight of the cutting board, the position of the cutting board in relation to the tow frame, the position of the tow frame in relation to the tractor, and the preset tension of the spring.

In order to obtain correct function without excessive wear it is important that the pressure on the field is kept within certain values. Since the second and the third of the above mentioned factors may change during operation, it is insufficient to preset the tension of the spring once and for all, and readjustments of the spring tension must be made currently.

When a mower is coupled to a tractor, the field pressure is adjusted according to a certain procedure. However, it is a problem subsequently to check that the set field pressure is maintained during operation.

The object of the invention is to provide an indicator, which the user can watch during operation in order to check whether the correct field pressure is maintained or whether the spring pre-tension needs readjustment.

In accordance with the invention this object is fulfilled in that a harvester of the type concerned is characterized in that at one end of the spring a scale member is fixed with a fixing part and a scale part, and at the other end of the spring an indicator member is fixed. Thereby it is possible for the user during operation to watch the position of the indicator member in relation to the scale member, since deviations in relation to the position after adjustment of the field pressure indicates that the spring tension has changed, and thereby also the field pressure.

In a preferred embodiment the position of the scale member in relation to the fixing member is adjustable. Thereby it is made possible, after setting of the field pressure, to adjust the position of the scale member in such a manner that the indicator element points to a position on the scale which indicates "normal field pressure".

In the following the invention will be explained in further detail by means of an example of an embodiment with reference to the schematic drawing, on which
Fig. 1 shows a side view of a mower,
Fig. 2 shows a spring with a scale part and an indicator element, and
Fig. 3 is a view corresponding to Fig. 2 of another embodiment.

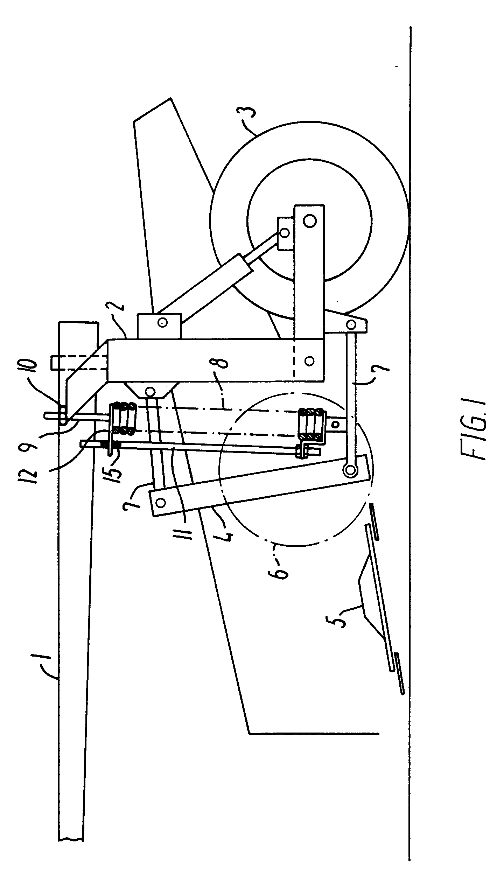

Fig. 1 shows a towed mower comprising a tow bar 1 for coupling to a tractor and a carrier frame 2 with ground wheels 3. A frame 4 carries cutter disks 5 and a conditioning rotor 6, among other things.

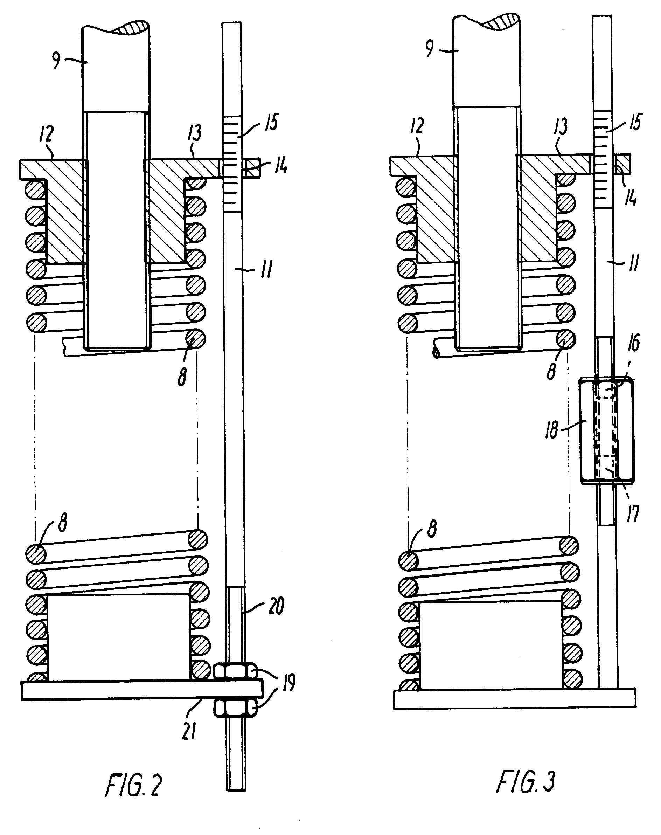

By means of parallelogram arms 7 the frame 4 is suspended in the carrier frame 2. A spring 8 is at one end fastened to the lower parallelogram arm 7 and at its other end it is fastened to the carrier frame 2 by means of a threaded bar 9 and a nut 10. By turning the nut 10 the threaded bar 9 is moved up or down in relation to the carrier frame 2, which results in a corresponding adjustment of the tension of the spring 8. As shown in more detail in Figs. 2 and 3, at the lower end of the spring 8 a scale bar 11 is fastened, extending parallel to the spring 8, and at the upper end of the spring an indicator element 12 is fastened, comprising a flange 13, extending at right angles to the spring and comprising a hole 14, through which the scale bar 11 passes.

At one end the scale bar 11 has a marking 15, and in the embodiment shown in Figs. 1 and 2 it is fixed by means of nuts 19, which are screwed on to a comparatively long thread 20 on the scale bar 11 at either side of a flange 21, which is fixed in relation to the lower end of the spring 8. By displacing the position of the nuts 19 on the thread 20 the length of the scale bar can be adjusted. In the embodiment shown in Fig. 3 the scale bar 11 is divided into two between the marking 15 and its fixed end. The ends 16 and 17 are provided with threads and are screwed into a connecting member 18 whereby the length of the scale bar 11 can be adjusted.

When the mower is coupled to a tractor, the field pressure from the frame 4 is adjusted in a manner that will be prescribed by the manufacturer. Then the length of the scale bar 11 is adjusted by means of the connecting member 18 so that the marking 15 is suitably centered in relation to the flange 13 of the indicator element 12. Thereby the marking 15 will indicate the prescribed relief. During operation the user can easily watch the position of the flange 13 in relation to the marking 15, which position is an expression of the field pressure and thereby an indication of whether adjustment of the tension of the spring 8 is required.

## Claims

1. A harvester of the type comprising cutting means (5) carried by a frame (4), which is suspended in and moveable up and down in relation to a carrier frame (2), which is designed to be carried by a tractor or which has ground wheels (3) and is designed for being towed by a tractor, a spring (8) being fixed at one end in relation to the first frame (4) and at the other end in relation to the carrier frame (2) to partly carry the first frame (4), and a device (9, 10) being provided for manual adjustment of the tension of the spring (8), **characterized** in that at one end of the spring (8) a scale member (11) is fixed with a fixing part and a scale part (15), and at the other end of the spring (8) an indicator member (13) is fixed.

2. A harvester according to claim 1, **characterized** in that the position of the scale part (15) in relation to the fixing part is adjustable.

## Patentansprüche

1. Erntemaschine der Art umfassend Schneidmittel (5) von einem Rahmen (4) getragen, welcher in einem Tragrahmen (2) aufgehängt und im Verhältnis dazu auf- und abwärts beweglich ist, indem der Tragrahmen ausgebildet ist, von einem Schlepper getragen zu werden bzw. Bodenräder (3) hat und zum Schleppen von einem Schlepper vorgesehen ist, wobei an einem Ende des ersten Rahmens (4) und am anderen Ende des Tragrahmens (2) zum teilweisen Tragen des ersten Rahmens (4) eine Feder (8) befestigt ist, und dass für die manuelle Justierung der Federspannung (8) eine Vorrichtung (9, 10) vorgesehen ist, dadurch **gekennzeichnet**, dass an einem Ende der Feder (8) ein Messgerät (11) mit einem Befestigungsteil sowie einem Messelement (15) und am anderen ende der Feder (8) ein Indikator (13) verbunden ist.

2. Erntemaschine nach Anspruch 1, dadurch **gekennzeichnet**, dass die Position des Messelementes (15) gegenüber dem Befestigungsteil einstellbar ist.

## Revendications

1. Moissonneuse du type comportant des moyens de coupe (5) portés par un cadre (4), qui est suspendu dans et est mobile vers le haut et vers le bas par rapport à un cadre porteur (2), lequel est conçu pour être porté par un tracteur ou bien comporte des roues porteuses (3) et est conçu pour être attelé à un tracteur, un ressort (8) étant, à une extrémité, fixé au premier cadre (4) et, à l'autre extrémité, fixé au cadre porteur (2), pour partiellement supporter le premier cadre (4), et un dispositif (9, 10) prévu pour réglage manuel de la tension du ressort (8), **caractérisée** par le fait qu'à une extrémité du ressort (8) est fixé un organe de graduation (11) avec une pièce de fixation et une échelle de graduation (15) et par le fait qu'à l'autre extrémité du ressort (8) est fixé un organe indicateur (13).

2. Moissonneuse selon la revendication 1, **caractérisé** en ce que la position de l'échelle de graduation (15) est réglable par rapport à la pièce de fixation.
